# EUROPÄISCHE PATENTSCHRIFT

(11) **EP 1 044 863 B1**
(45) Veröffentlichungstag und Bekanntmachung des Hinweises auf die Patenterteilung: **02.06.2004**
(21) Anmeldenummer: 00107431.9
(22) Anmeldetag: 06.04.2000
(51) Int. Cl.: B62D 21/15

(54) **Kraftwagen mit einer Tragstruktur**
Motor vehicle chassis
Chassis de véhicule automobile

(30) Priorität: 16.04.1999 DE 19917177
(43) Veröffentlichungstag der Anmeldung: 18.10.2000
(73) Patentinhaber: DaimlerChrysler AG, 70567 Stuttgart (DE)
(72) Erfinder: Bartesch, Hans-Georg, 71032 Böblingen (DE); Baumann, Karl-Heinz, 71149 Bondorf (DE); Bruhnke, Ulrich, 71139 Ehningen (DE); Justen, Rainer, 71069 Sindelfingen (DE); Kohler, Jürgen, 71134 Aidlingen (DE)

(56) Entgegenhaltungen:
- WO-A-94/06669
- DE-A- 2 257 940
- US-A- 3 881 742
- US-A- 5 275 436

## Beschreibung

Die Erfindung betrifft einen Kraftwagen mit einer Tragstruktur der im Oberbegriff des Hauptanspruchs angegebenen Art, wie er aus der WO-A-9406669 bekannt geworden ist.

Ein Kraftwagen mit einem die Knautschzone bildenden Vorbau ist z.B. der DE PS 22 57 940 bereits als bekannt zu entnehmen. Die keilförmig gestalteten Abweiselemente bestehen hierbei aus zu einem Block miteinander verschweißten Blechplatten und sind jeweils auf der hinteren Begrenzungswand der vorderen Radläufe befestigt. Beim Frontalaufprall treffen die Räder nach entsprechender Deformation der Knautschzone mit ihrem Abrollumfang am ihnen zugeordneten Abweiselement auf und sollen infolge der Abweiswirkung desselben aus den Radläufen heraus schräg nach außen und hinten abgewiesen werden. Hierdurch kann unter Umständen verhindert werden, daß die vordere Stirnseite der Sicherheitsfahrgastzelle von den Vorderrädern eingedrückt wird. Als nachteilig ist jedoch der Umstand anzusehen, daß die Räder in eine seitliche Überdeckungsstellung zu den Seitentüren des Kraftwagens gelangen und somit die Öffnungsfähigkeit der Seitentüren nach dem Unfall beeinträchtigen können.

Außerdem hängt die Wirksamkeit der Abweiselemente in erheblichem Maße von der Konstruktion der die Räder tragenden Achse und von der Art des Zusammenstoßes ab. So wird es bei ungünstigen Achs- bzw. Fahrwerkskonstruktionen oder Aufprallsituationen, wie bei einer Kollision mit geringer Breitenüberdeckung oder einer Kollision unter einem zur Mittellängsachse des Kraftwagens schrägen Winkel weiterhin zu einer unerwünschten Blockbildung kommen, bei welcher das betroffene Rad innerhalb der Knautschzone verbleibt und den Verformungsablauf derselben beeinträchtigt.

Aufgabe der Erfindung ist es, einen Kraftwagen mit einer Tragstruktur nach dem Oberbegriff des Anspruchs 1 derart zu verbessern, dass die Öffnungsfähigkeit der Seitentüren auch bei crashbedingt nahezu vollständig kollabierter Knautschzone sichergestellt werden kann, wobei die Abweisfunktion weitgehend unabhängig von der Radaufhängung oder der Art des Zusammenstoßes gewährleistet sein soll, keine zusätzlichen Bauteile für die Abweisrampen erforderlich sein sollen und die Ausführungsform besonders für kompakte oder subkompakte Fahrzeuge, deren Räder nur einen geringen Abstand zur Fahrgastzelle aufweisen geeingnet sein soll.

Diese Aufgabe wird erfindungsgemäß mit den Merkmalen des Patentanspruchs 1 gelöst.

Vorteilhafte Ausgestaltungen der Erfindung sind in den Unteransprüchen angegeben.

Von den schräg nach unten gerichteten Abweisrampen werden die sich beim Kollabieren der Knautschzone in Richtung der Sicherheitsfahrgastzelle bewegenden Räder unter den Boden des Kraftwagen verschoben. Dadurch wird die sogenannte Blockbildung infolge des Verbleibens der Räder innerhalb der Knautschzone vermieden, die den Verformungsablauf der Knautschzone erheblich stören und ihren möglichen Verformungsweg entsprechend reduzieren würde. Durch die bei einem entsprechenden Crash stattfindende Abweisung des Rades an der zugeordneten Abweisrampe kann insgesamt ein größerer bzw. längerer Bereich der Knautschzone zur Deformation genutzt werden, was bei einem Unfall ein stetig ansteigendes Kraftniveau und damit eine deutlich geringere Insassenbelastung zur Folge hat.

Darüber hinaus wird durch die Absenkführung der Räder unter den Boden des Kraftwagens sichergestellt, daß die Seitentüren auch bei crashbedingt nahezu vollständig aufgezehrter Knautschzone ohne Behinderung durch die Räder geöffnet werden können.

Die beaspruchten erfindungsgemäßen Abweisrampen werden jeweils von einer beulsteifen Begrenzungswand der Sicherheitsfahrgastzelle selbst gebildet.

Über ihre gesamte Höhenerstreckung etwa rechtwinklig zur Längsmittenebene des Kraftwagens verlaufende Abweisrampen erzwingen im Crashfall bei einfacher Bauweise eine zur Längsmittenebene etwa parallele Führung der Räder.

Damit die Räder auch bei einer vor dem Crash eingeleiteten Vollbremsung und einer damit verbundenen Nickbewegung des Kraftwagenbugs besonders zuverlässig unter den Wagenboden abgewiesen werden, hat es sich als vorteilhaft erwiesen, wenn sich die Abweisrampen bei vollständig eingefederten Rädern zumindest bis auf die Höhe der Raddrehachsen erstrecken.

Als insbesondere vorteilhaft hat es sich gezeigt, wenn es bei einem Frontalunfall durch crashbedingtes Zusammenwirken der Vorderräder mit den vorderen Abweisrampen zu einem Aufsteigen des vorderen Endes der Fahrgastzelle relativ zur Vorbaustruktur kommt und der fahrzeugabhängige, unerwünschte Nickeffekt vermieden wird. Hierdurch kann ein Überfahren der Vorbaustruktur durch den Unfallpartner und eine damit verbundene erhöhte Deformation der Vorbaustruktur verhindert werden. Außerdem unterbleibt im Kollisionsfall ein unerwünschtes Aufsteigen der Fahrzeuginsassen in ihrem Fahrzeugsitz weitestgehend.

vorteilhaft werden die Abweisrampen von ohnehin vorhandenen, entsprechend beulsteifen, schrägen Stirnwandbereichen der Sicherheitsfahrgastzelle selbst gebildet, da hierbei keine zusätzlichen Bauteile benötigt werden. Um bei geringem Gewicht eine beulsteife Ausbildung der Stirnwandbereiche zu erreichen, bestehen diese vorzugsweise aus mehrwandigen oder mehrschichtigen Leichtbauplatten.

Bei einer insgesamt aus Leichtbauplatten bestehenden Tragstruktur eines Kraftwagens läßt sich der untere Stirnwandbereich in günstiger Weise derart abschrägen und auf die Einbaulage der Räder abstimmen, das der gesamte untere Bereich der Stirnwand ohne technischen Mehraufwand als Abweisrampe ausgebildet ist.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in
- Fig. 1: eine Perspektivansicht von schräg vorne oben auf die Tragstruktur des erfindungsgemäßen Kraftwagens;
- Fig. 2: eine Perspektivansicht von seitlich oben auf die Tragstruktur des Kraftwagens;
- Fig. 3: eine Perspektivansicht von seitlich unten auf die Tragstruktur des Kraftwagens;
- Fig. 4: eine Perspektivansicht von schräg vorne auf die teilweise mit Verkleidungsteilen beplankte Tragstruktur gemäß den Figuren 1-4;
- Fig. 5: eine Seitenansicht auf die teilweise beplankte Tragstruktur;
- Fig. 6: fünf schematische Seitenansichten auf die vordere Knautschzone und den sich dahinter anschließenden vorderen Bereich der Sicherheitsfahrgastzelle, wobei in den fünf Darstellungen 6.1 bis 6.5 zeitlich aufeinander folgende Stadien eines Frontalaufpralls des Kraftwagens auf ein Hindernis gezeigt sind.

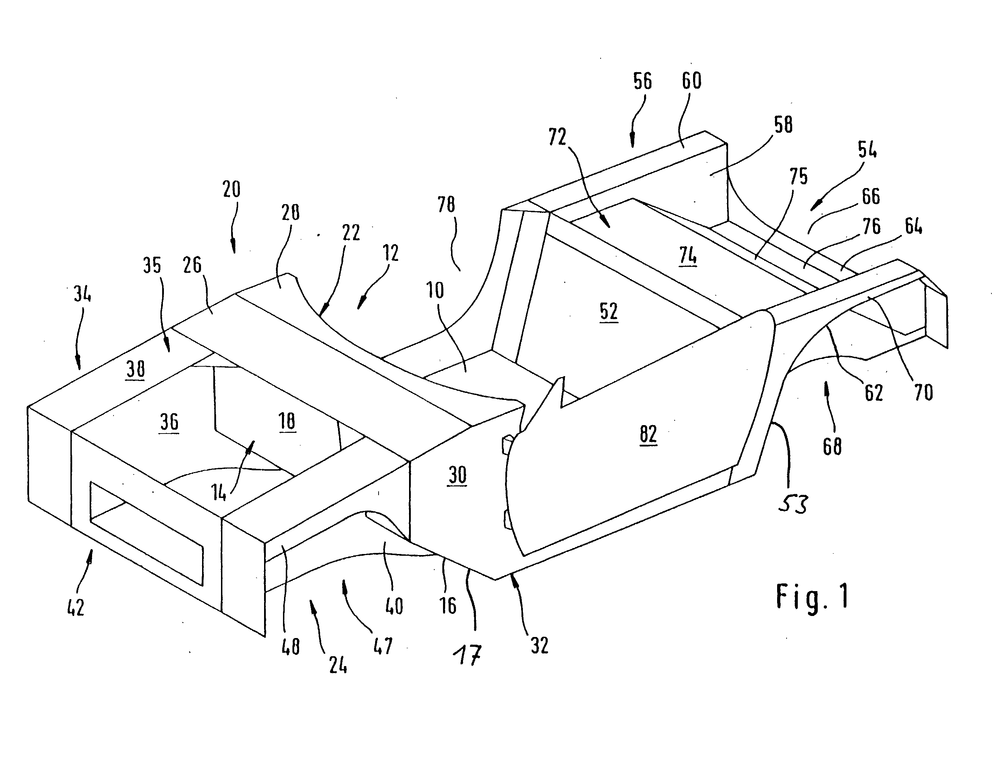

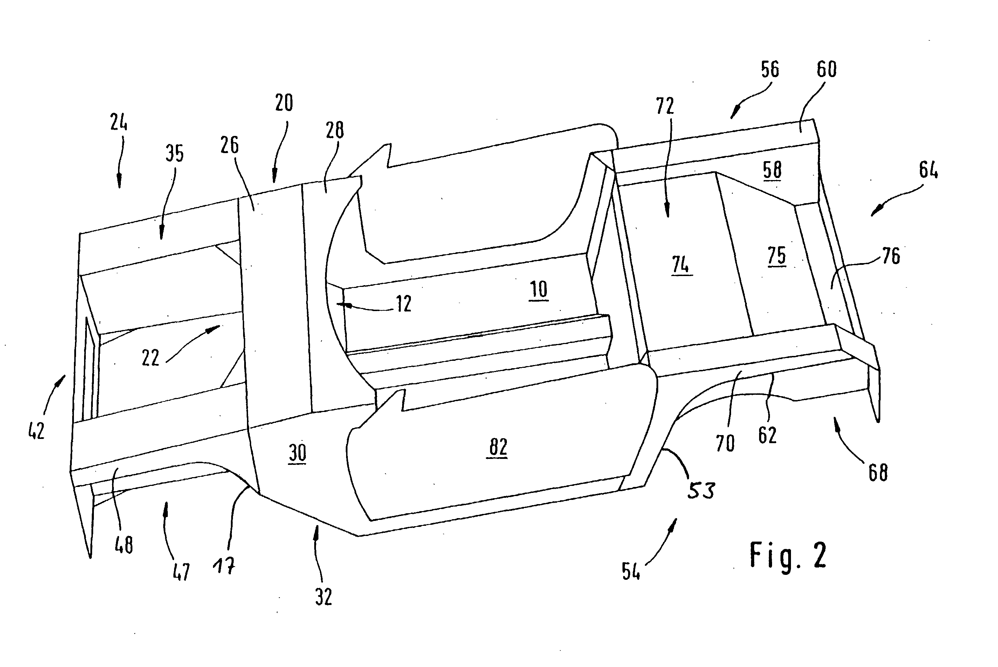

In den Fig.1 und 2 ist in Perspektivansicht von schräg vorne oben bzw. von seitlich oben die Tragstruktur eines Kraftwagens dargestellt, die im hier gezeigten Ausführungsbeispiel im wesentlichen aus ebenen Platten zusammengesetzt ist und einen tragenden Boden 10 in Leichtbauweise umfaßt. In einem vorderen Fußraumbereich 12 geht der Boden 10 in eine die Fahrgastzelle nach vorne begrenzende Stirnwand 14 in mehrschichtiger oder mehrwandiger Leichtbauweise über, die einen an den Boden 12 anschließenden, schräg nach vorn oben gerichteten Übergangsbereich 16 und einen davon oberhalb angeordneten, etwa vertikalen Bereich 18 umfaßt. Die Stirnwand 14 mit dem Übergangsbereich 16 erstreckt sich hier über die gesamte Breite des Bodens 10. Seitlich und oben ist der Fußraumbereich 12 von einer Plattenanordnung 20 in Leichtbauweise begrenzt, die eine vordere und eine hintere obere Leichtbauplatte 26,28 sowie seitliche Stützkastenwände 30 umfaßt. Die seitlichen Stützkastenwände 30 sind dabei jeweils als Wandbereich einer zugeordneten Seitenwand 32 der Tragstruktur gestaltet. Die Seitenwand 32 weist einen Türausschnitt 78 für eine Seitentür auf, von der in den Fig.1 bis 3 lediglich eine tragende Türinnenschale 82 dargestellt ist. Insgesamt bilden die vordere Stirnwand 14, der Boden 10, die beiden seitlichen Stützkastenwände 30 sowie die beiden oberen Leichtbauplatten 26,28 einen steifen Stützkasten 22, an dem eine als vordere Knautschzone ausgebildete Vorbaustruktur 24 befestigt ist. Dabei können der Boden 10, der Übergangsbereich 16 und der obere Bereich 18 der Stirnwand 14 sowie die oberen Leichtbauplatten 26,28 entweder aus einer einteiligen, entsprechend abgewinkelten Platte oder aus mehreren Platten bestehen, die entsprechend aneinander gefügt sind.

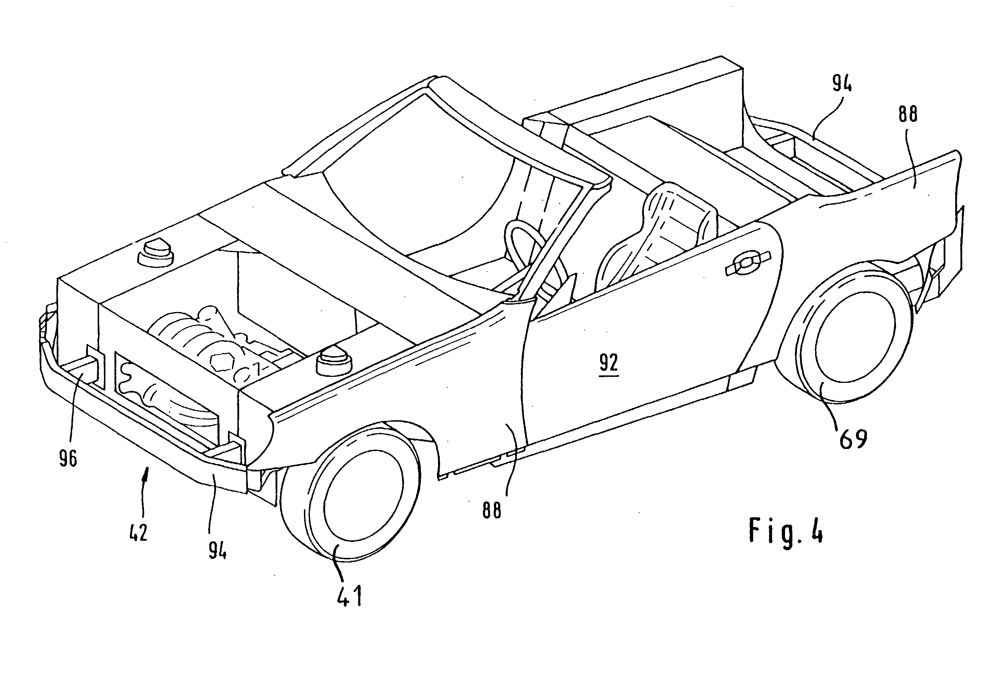

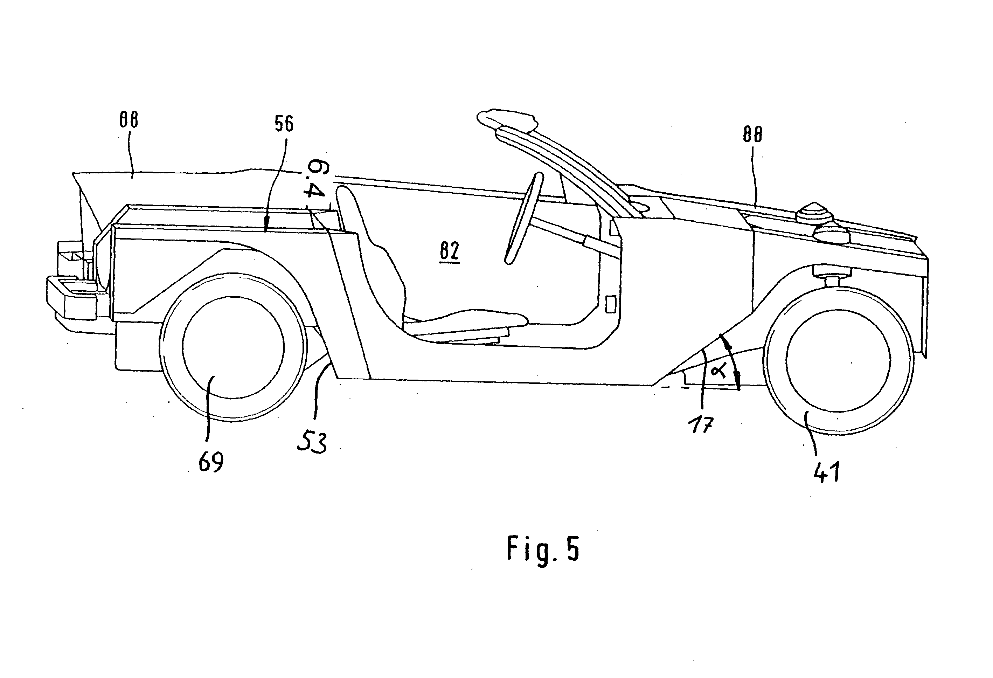

Die Vorbaustruktur 24 umfaßt zwei vordere Längsträger 34 in Leichtbauweise, die jeweils einen abgewinkelten Querschnitt mit einem etwa vertikalen Plattenschenkel 36 und einem quer dazu verlaufenden Plattenschenkel 38 aufweisen. Am vorderen Ende der Längsträger 34 ist ein Frontmodul 42 befestigt, welches hier eine in Fahrzeugquerrichtung sowie etwa vertikal verlaufende Leichtbauplatte umfaßt. Die Leichtbauplatte 42 ist in ihrer Höhe an die der vertikalen Plattenschenkel 36 und in ihrer Breite an die des Stützkastens 22 angepaßt. Die Seitenwände 32 sind bis zu dem Frontmodul 42 nach vorne verlängert und mit jeweils einem Radausschnitt 47 für einen zugeordneten vorderen Radlauf 40 versehen. Demgemäß ist die Seitenwand 32 über die überwiegende Länge des zugeordneten Längsträgers 34 als relativ schmaler Steg 48 ausgebildet, der am quer verlaufenden Plattenschenkel 38 des entsprechenden Längsträgers 34 unter etwa einem rechten Winkel sowie an dem Frontmodul 42 befestigt ist. Insgesamt bilden der jeweils vertikale sowie der zugeordnete, quer verlaufende Plattenschenkel 36,38, der entsprechende schmale Steg 48, die Stirnwand 14 und die vordere Leichtbauplatte 42 einen vorderen Radlauf 40 der Tragstruktur, in dem jeweils ein von Radführungsgliedern gehaltenes Vorderrad 41 (Fig.4,5) angeordnet ist.

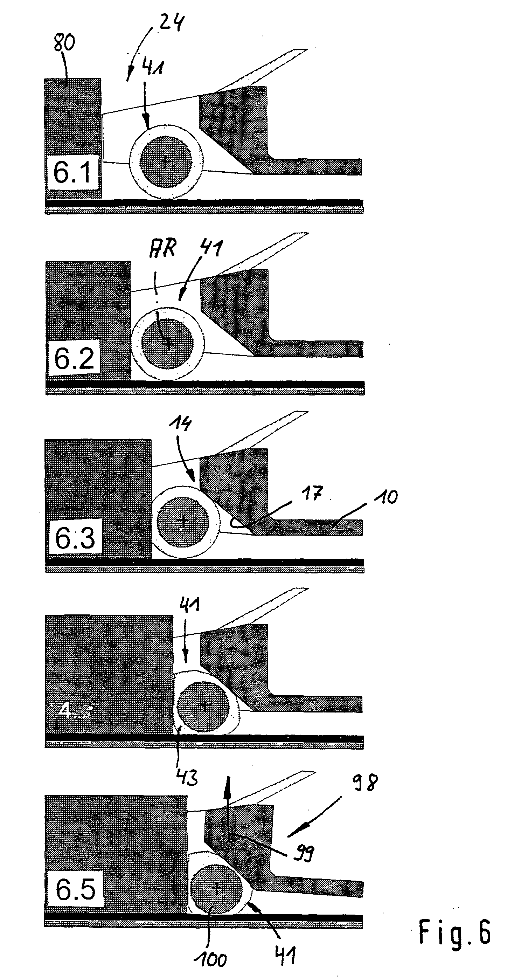

Wie insbesondere in den Fig. 1 bis 3 sowie 5 erkennbar, ist zwischen der Sicherheitsfahrgastzelle und dem Abrollumfang der beiden Vorderräder 41 in Geradeausstellung jeweils eine schräg zur Mittellängsachse des Kraftwagens verlaufende Abweisfläche 17 für das zugeordnete Vorderrad 41 vorgesehen, die als schräg nach unten gerichtete Abweisrampe ausgebildet ist. Die Funktion dieser Abweisrampen wird im weiteren unter Bezugnahme von Fig.6 noch näher erläutert. Die beiden vorderen Abweisrampen 17 sind in dem hier gezeigten Ausführungsbeispiel als seitliche Abschnitte des insgesamt beulsteifen Übergangsbereichs 16 der Stirnwand 14 der Fahrgastzelle gestaltet. Gleichfalls wäre es auch denkbar, dass lediglich die die Abweisrampen 17 bildenden seitlichen Abschnitte des Übergangsbereichs 16 der Stirnwand 14 aus einer mehrschichtigen oder mehrwandigen Leichtbauplatte gebildet sind. Ebenso wäre es denkbar, die die Abweisrampen 17 bildenden seitlichen Abschnitte des Übergangsbereichs 16 mit aufgeklebten, aufgeschweißten oder dgl. befestigten, mehrschichtigen oder mehrwandigen Leichtbauplatten zu verstärken, damit besonders beulsteife Abweisrampen 17 geschaffen sind. Die Abweisrampen 17 verlaufen hier über ihre gesamte Höhenerstreckung etwa rechtwinklig zur Längsmittenebene des Kraftwagens und sind insgesamt eben ausgebildet. Dabei sind die Abweisrampen 17 vorzugsweise in einem Winkel (Fig.5) von zwischen 30 und 60° - wie dargestellt - gegenüber der gedachten, angedeuteten Verlängerung des Fahrzeugbodens 10 angeordnet. Alternativ wären auch über ihre Länge leicht gewölbte Abweisrampen 17 denkbar.

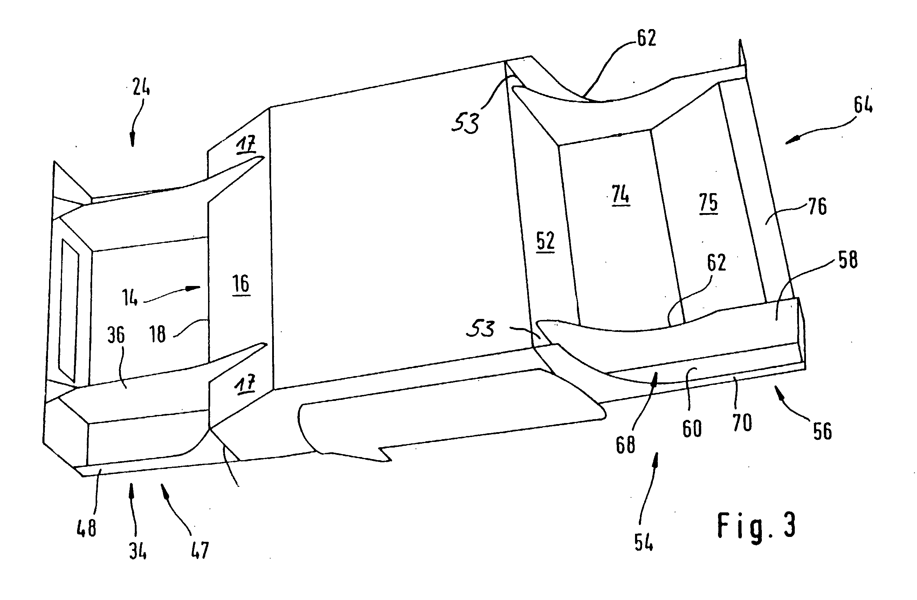

Insbesondere in Fig.2 und Fig.3 ist erkennbar, dass der Boden 10 hinten in eine schräg nach hinten oben ragende Hecktrennwand 52 übergeht, welche die Sicherheitsfahrgastzelle nach hinten begrenzt und aus einer Leichtbauplatte gebildet ist. Die Hecktrennwand 52 erstreckt sich zwischen den Seitenwänden 32 über die annähernd gesamte Breite des Bodens 10. Hinter der Hecktrennwand 52 weist die Tragstruktur eine als hintere Knautschzone ausgestaltete Heckstruktur 54 mit hinteren Längsträgern 56 aus Leichtbauplatten auf, die jeweils einen in Fahrzeughochrichtung und einen in Fahrzeuglängsrichtung abgewinkelten Plattenschenkel 58,60 umfassen. Im Bereich einer nicht gezeigten Hinterachse sind die vertikalen Plattenschenkel 58 mit einem inneren Radausschnitt 62 versehen. Am hinteren Ende der hinteren Längsträger 56 ist ein Heckmodul 64 befestigt, dem hier eine in Fahrzeugquerrichtung sowie etwa vertikal verlaufende Rückwand 66 in Leichtbauweise zugeordnet ist. Die Seitenwände 32 sind bis zu der Rückwand 64 nach hinten verlängert und mit jeweils einem Radausschnitt 62 eines hinteren Radlaufes 68 versehen. Insgesamt bilden der jeweilige vertikale sowie der zugeordnete, quer verlaufende Plattenschenkel 58,60, der entsprechende schmale Steg 70, die Hecktrennwand 52 und die Rückwand 64 den jeweils hinteren Radlauf 68 der Tragstruktur, in dem jeweils ein von Radführungsgliedern gehaltenes Hinterrad 69 (Fig.4,5) angeordnet ist. Die vertikalen Plattenschenkel 58 der hinteren Längsträger 56 sind über eine Plattenanordnung 72 aus den Leichtbauplatten 74,75,76 fest miteinander zu einem Kasten verbunden.

Zwischen der Sicherheitsfahrgastzelle und dem Abrollumfang der beiden Hinterräder 69 ist wiederum jeweils eine schräg zur Mittellängsachse des Kraftwagens verlaufende Abweisfläche 53 für das zugeordnete Hinterrad 69 vorgesehen, die als schräg nach unten gerichtete Abweisrampe ausgebildet ist. Diese beiden hinteren Abweisrampen 53 sind beulsteif und als seitliche Abschnitte der Hecktrennwand 52 der Fahrgastzelle ausgebildet. Auch hier wäre es möglich, dass lediglich die die Abweisrampen 53 bildenden seitlichen Abschnitte der Hecktrennwand 52 aus einer mehrschichtigen oder mehrwandigen Leichtbauplatte gebildet sind. Ebenso können die die hinteren Abweisrampen 53 bildenden seitlichen Abschnitte der Hecktrennwand 52 mit aufgeklebten, aufgeschweißten oder dgl. befestigten, mehrschichtigen oder mehrwandigen Leichtbauplatten verstärkt sein. Die Abweisrampen sind vorzugsweise von ebener - oder aber von über ihre Länge gewölbter Gestalt.

Die Fig.4 und 5 zeigen in Perspektiv- bzw. in Seitenansicht eine teilweise mit Verkleidungsteilen beplankte Tragstruktur, die insgesamt unter der Verkleidung angeordnet ist. An der rechten Seite der Tragstruktur sind den vorderen und hinteren Kotflügel bildende Verkleidungsteile 88 an entsprechenden Aufnahmen der Tragstruktur befestigt. Die Türinnenschalen 82 sind mit Türbeplankungen 92 verkleidet, die an die umgebenden Verkleidungsteile 88, hier insbesondere des zugeordneten vorderen und hinteren Kotflügels angepaßt sind. Der jeweilige vordere oder hintere Radlauf 40,68 kann ebenfalls von einer hier nicht dargestellten und an den Radlaufumfang angepaßten, üblichen Radlaufverkleidung aus Kunststoff begrenzt sein, mit der auch die jeweils zugeordnete Abweisrampe 17,53 überdeckt wird. Das in Fig.4 gezeigte Frontmodul 42 umfaßt zusätzlich einen der Leichtbauplatte vorgeordneten unteren Querträger 94, der über zwei Längsschenkel 96 an der Leichtbauplatte bzw. an den Längsträgern 56 befestigt ist. Am hinteren Ende des Fahrzeugs ist ein gleichartiger Querträger 94 befestigt.

In Fig.6 sind fünf schematische Seitenansichten auf die vordere Knautschzone 24 und den sich dahinter anschließenden vorderen Bereich der Sicherheitsfahrgastzelle dargestellt, wobei in den fünf Darstellungen 6.1 bis 6.5 zeitlich aufeinander folgende Stadien eines Frontalaufpralls des Kraftwagens auf ein sich bewegendes oder stehendes Hindernis 80 gezeigt sind. Die Darstellung 6.1 zeigt dabei das Auftreffen des Kraftwagens auf das Hindernis 80 und den Beginn der crashbedingten Verformung der vorderen Knautschzone 24. Zum Zeitpunkt 6.2 ist der im unverformten Ausgangszustand in Fahrzeuglängsrichtung vor dem Vorderrad 41 befindliche Teil der Vorbaustruktur 24 zur Energieabsorption aufgezehrt und das Vorderrad trifft infolge der fortschreitenden Verformung des Vorbaus auf das Hindernis 80 auf. Es ist ersichtlich, dass sich die Abweisrampen 17 bei vollständig eingefederten Vorderrädern 41 etwa bis auf Höhe von deren oberem Ende erstrecken. In 6.3 ist der Zeitpunkt dargestellt, zu dem das infolge des crashbedingten Kollabierens der vorderen Knautschzone 41 in Richtung nach hinten bewegte Vorderrad 41 auf der dahinter angeordneten Abweisrampe 17 auftrifft. Darstellung 6.4 zeigt im weiteren Verlauf des Aufpralls, wie das am Hindernis aufgetroffene Vorderrad 41 zwischen der schräg nach unten gerichteten Abweisrampe 17 und der Fahrbahnoberfläche eingezwängt wird, wobei infolge dieser Einzwängung die Luft aus dem Reifen 43 entweichen kann. Schließlich zeigt die Darstellung 6.5 einen Zeitpunkt des Aufpralls, bei der das durch die weitere Verformung der vorderen Knautschzone 41 gegen die Abweisfläche 17 bewegte Rad an der Stirnseite 14 der Fahrgastzelle vorbei in Richtung der Fahrgastzelle unter den Boden 10 des Kraftwagens absenkgeführt wird. Dabei wird das der Vorbaustruktur 24 zugewandte vordere Ende 98 der Fahrgastzelle durch das crashbedingte Zusammenwirken der Vorderräder 41 mit den steifen Abweisrampen 17 - wie mit dem Pfeil 99 angedeutet - relativ zur Vorbaustruktur 24 angehoben. Mit anderen Worten stützt sich die Fahrgastzelle über die Abweisrampen 17 an den sehr steifen Felgen 100 der Vorderräder 41 ab und gleitet an dieser gegenüber der Vorbaustruktur 24 auf. Damit das in 6.5 gezeigte Aufsteigen der Vorbaustruktur sicher gewährleistet ist, müssen sich die Abweisrampen 17 bei vollständig eingefederten Rädern 41 zumindest bis auf Höhe der Raddrehachsen AR erstrecken. Das Aufsteigen des vorderen Endes 98 der Fahrgastzelle ist einerseits abhängig von dem Neigungswinkel der Abweisrampen 17 und andererseits von der Abstimmung des Durchmessers der Räder 41 bzw. der Felgen auf die Lage und Ausgestaltung der Abweisrampen 17. Gemäß dem hier gezeigten Zusammenwirken der Vorderräder 41 mit den steifen Abweisrampen 17 erfolgt auch das Zusammenwirken der Hinterräder 69 mit den zugeordneten hinteren Abweisrampen 53, die sich in der in den Fig.1 bis 5 gezeigten Tragstruktur bis etwa auf Höhe der oberen Bordwandkante erstrecken.

Die überwiegende Zahl der Leichtbauplatten der hier gezeigten Tragstruktur sind vorzugsweise je nach Anforderung in Sandwichbauweise, mit Wabenstruktur, in Holz, in Aluminium, als Faserverbund, als Strangpreßprofil oder dgl. gefertigt und weisen eine ebene und einfache Gestalt auf. Die insbesondere aus einem Strangpressprofil hergestellten Abweisrampen 17,53 sind dabei entsprechend dick gestaltet, um eine ausreichende Beulsteifigkeit gewähleisten zu können.

Anstelle der oben beschriebenen Tragstruktur aus Leichtbauplatten können auch Tragstrukturen in heute üblicher Karosseriebauweise, Schalen- oder Rahmenbauweise verwendet werden, bei denen zwischen der Sicherheitsfahrgastzelle und dem Abrollumfang der beiden Räder 41,69 der entsprechenden Knautschzone 24,54 jeweils eine schräg nach unten gerichtete Abweisrampe 17,53 angeordnet ist. Dabei können die steifen Abweisrampen 17,53 als Abschnitt einer Begrenzungswand 14,52 der Fahrgastzelle gebildet oder auf einer solchen Begrenzungswand befestigt werden. Auch können die Abweisrampen in einem Abstand vor bzw. hinter einer Begrenzungswand 14,52 der Fahrgastzelle angeordnet und beispielsweise an einem Längsträger oder sonstigen tragenden Bauteil der Vorbau- oder Heckstruktur 24,54 oder der Fahrgastzelle befestigt sein. Gleichfalls wäre es denkbar, dass die schräg nach unten gerichteten Abweisrampen 17,53 nicht rechtwinklig zur Längsmittenebene des Kraftwagens verlaufen, sondern vielmehr z.B. leicht in Richtung zur Fahrzeugmitte gerichtet verlaufen. Demgemäß würde ein crashbedingt gegen die Abweisrampe bewegtes Rad nicht nur unter den Boden absenkgeführt werden, sondern auch in Richtung gegen die Fahrzeugmitte. Die Abweisrampen 17,53 können außer aus einer Leichtbauplatte auch aus einem anderen ausreichend beulsteifen Werkstoff gebildet sein.

## Patentansprüche

1. Kraftwagen mit einer Tragstruktur, die an wenigstens einem Ende einer Sicherheitsfahrgastzelle mit einer Knautschzone (24,54) und zwei seitlich angeordneten Radläufen (40;68) versehen ist, in denen jeweils ein von Radführungsgliedern gehaltenes Rad (41;69) angeordnet ist, wobei zwischen der Sicherheitsfahrgastzelle und dem Abrollumfang der beiden der Knautschzone (24;54) zugeordneten Räder (41;69) in Geradeausstellung jeweils eine schräg zur Mittellängsachse des Kraftwagens verlaufende Abweisfläche (17;53) für das zugeordnete Rad (41;69) vorgesehen ist, an der das infolge crashbedingter Verformung der Knautschzone (24;54) gegen die Abweisfläche (17;53) bewegte Rad (41;69) an der Stirnseite (14;52) der Fahrgastzelle vorbei abgewiesen wird,
wobei die Abweisflächen schräg nach unten gerichtete Abweisrampen (17;53) sind, von denen die Räder (41;69) beim Kollabieren der Knautschzone (24;54) in Richtung der Fahrgastzelle unter einen Boden (10) des Kraftwagens absenkgeführt sind,
**dadurch gekennzeichnet,**
**dass** die jeweilige Abweisrampe (17;53) als seitliche Abschnitte eines Übergangsbereicher (16) einer insgesamt beulsteifen Begrenzungswand (14,52) der Fahrgastzelle gebildet ist, wobei sich die Begrenzungswand (14, 52) über die gesamte Breite der Bodens (10) erstrecht.

2. Kraftwagen nach Anspruch 1,
**dadurch gekennzeichnet,**
**dass** die Abweisrampen (17;53) über ihre gesamte Höhenerstreckung etwa rechtwinklig zur Längsmittenebene des Kraftwagens verlaufen.

3. Kraftwagen nach Anspruch 1,
**dadurch gekennzeichnet,**
**dass** sich die Abweisrampen (17;53) bei vollständig eingefederten Rädern (41;69) zumindest bis auf Höhe der Raddrehachsen (AR) erstrecken.

4. Kraftwagen nach Anspruch 1,
**dadurch gekennzeichnet,**
**dass** die Knautschzone eine Vorbaustruktur (24) ist, wobei das der Vorbaustruktur (24) zugewandte vordere Ende der Fahrgastzelle durch ein crashbedingtes Zusammenwirken der Vorderräder (41) mit den Abweisrampen (17) relativ zur Vorbaustruktur (24) angehoben wird.

5. Kraftwagen nach Anspruch 1,
**dadurch gekennzeichnet,**
**dass** die Abweisrampen (17;53) seitliche Abschnitte eines insgesamt beulsteifen vorderen Stirnwandbereichs (16) der Fahrgastzelle sind.

6. Kraftwagen nach Anspruch 5,
**dadurch gekennzeichnet,**
**dass** zumindest der die Abweisrampen (17,53) bildende Stirnwandbereich (16,52) der Tragstruktur aus einer mehrschichtigen oder mehrwandigen Leichtbauplatte gebildet ist.

7. Kraftwagen nach Anspruch 6,
**dadurch gekennzeichnet,**
**dass** die Stirnwand (14) in ihrem unteren, die Abweisrampen (17) aufweisenden Bereich (16) als insgesamt ebene Platte ausgebildet ist, die sich zumindest annähernd über die gesamte Fahrzeugbreite erstreckt.

8. Kraftwagen nach Anspruch 1,
**dadurch gekennzeichnet,**
**dass** ein Fußraumbereich (12) des Kraftwagens von einem aus Leichtbauplatten bestehenden Stützkasten (22) für die Vorbaustruktur (24) begrenzt ist, wobei der Stützkasten einen vorderen Abschnitt des Wagenbodens (10), die Stirnwand (14), eine obere Plattenanordnung (26,28) sowie seitliche Platten (30) umfaßt.

9. Kraftwagen nach Anspruch 8,
**dadurch gekennzeichnet,**
**dass** die gesamte Tragstruktur des Kraftwagens aus im wesentlichen ebenen Platten zusammengesetzt ist, die mit Außenverkleidungsteilen (88,92) zu beplanken sind.

## Claims

1. Motor vehicle with a support structure which is provided at least at one end of an occupant safety cell with a crumple zone (24, 54) and two laterally arranged wheel arches (40; 68) in which a respective wheel (41; 69) held by wheel location members is arranged, wherein provided between the occupant safety cell and the rolling circumference of the two wheels (41; 69) associated with the crumple zone (24; 54), in the straight ahead position, is a respective deflection face (17; 53) extending obliquely to the central longitudinal axis of the motor vehicle for the associated wheel (41; 69), at which deflection face (17; 53) the wheel (41; 69) which is moved against the deflection face (17; 53) owing to the deformation of the crumple zone (24; 54) caused by a crash is deflected past the end face (14; 52) of the occupant cell, wherein the deflection faces are deflection ramps (17; 53) directed obliquely downwards, from which the wheels (41; 69), on the collapse of the crumple zone (24; 54), are guided down in the direction of the occupant cell below a base (10) of the motor vehicle, **characterised in that** the respective deflection ramp (17; 53) is formed as lateral sections of a transition region (16) of a limiting wall (14, 52), which is dent-resistant as a whole, of the occupant cell, the limiting wall (14, 52) extending over the entire width of the base (10).

2. Motor vehicle according to claim 1, **characterised in that** the deflection ramps (17; 53) over the entire extent of their height, extend approximately at right angles to the longitudinal centre plane of the motor vehicle.

3. Motor vehicle according to claim 1, **characterised in that** the deflection ramps (17; 53) extend at least to the level of the axes of rotation (AR) of the wheels when the wheels (41; 69) are completely deflected.

4. Motor vehicle according to claim 1, **characterised in that** the crumple zone is a front end structure (24), the leading end of the occupant cell facing the front end structure (24) being raised relative to the front end structure (24) by cooperation of the front wheels (41) with the deflection ramps (17) caused by a crash.

5. Motor vehicle according to claim 1, **characterised in that** the deflection ramps (17; 53) are lateral sections of a leading end wall region (16), which is dent-resistant as a whole, of the occupant cell.

6. Motor vehicle according to claim 5, **characterised in that** at least the end wall region (16, 52) of the support structure forming the deflection ramps (17, 53) are formed from a multi-layer or multi-wall light structural panel.

7. Motor vehicle according to claim 6, **characterised in that** the end wall (14) in its lower region (16) having the deflection ramps (17) is formed as a panel which is planar as a whole and which extends at least virtually over the entire vehicle width.

8. Motor vehicle according to claim 1, **characterised in that** a footwell region (12) of the motor vehicle is delimited by a support box (22) consisting of light structural panels for the front end structure (24), the support box comprising a leading section of the vehicle base (10), the end wall (14), an upper panel arrangement (26, 28) and lateral panels (30).

9. Motor vehicle according to claim 8, **characterised in that** the entire support structure of the motor vehicle is composed of substantially planar panels, which are to be clad with external panelling parts (88, 92).

## Revendications

1. Véhicule automobile comprenant un châssis de véhicule automobile, qui est équipé, au moins à une extrémité d'un habitacle de sécurité, d'une zone déformable (24, 54) et de deux passages de roue disposés latéralement (40; 68), dans chacun desquels est disposée une roue (41;69) supportée par des organes de guidage des roues, dans lequel est prévu, entre l'habitacle de sécurité et la circonférence de roulement des deux roues (41;69) associées à la zone déformable (24;54), une surface de déflexion (17;53) s'étendant obliquement par rapport à l'axe longitudinal médian du véhicule automobile en position droite pour la roue associée (41;69), surface contre laquelle est poussée la roue (41;69) déplacée contre la surface de déflexion (17;53) suite à une déformation de la zone déformable (24;54) provoquée par un accident, sur la face avant (14;52) de l'habitacle, dans lequel les surfaces de déflexion sont des plaques de déflexion (17;53) dirigées obliquement vers le bas, par lesquelles les roues (41; 69), lors de l'affaissement de la zone déformable (24;54), sont rabattues en direction de l'habitacle sous un plancher (10) du véhicule automobile, **caractérisé en ce que**,
chaque plaque de déflexion (17;53) est formée comme une partie latérale d'une zone de transition (16) d'une paroi de délimitation (14;52) de l'habitacle de sécurité, globalement renforcée, dans lequel la paroi de délimitation (14;52) s'étend sur toute la largeur du plancher (10).

2. Véhicule automobile selon la revendication 1,
**caractérisé en ce que**,
les plaques de déflexion (17;53) s'étendent à peu près à angle droit par rapport au plan central longitudinal du véhicule automobile sur toute leur hauteur.

3. Véhicule automobile selon la revendication 1,
**caractérisé en ce que**,
les plaques de déflexion (17;53) s'étendent au moins jusqu'à la hauteur de l'axe de rotation (AR) des roues lorsque les roues (41;69) sont complètement comprimées.

4. Véhicule automobile selon la revendication 1,
**caractérisé en ce que**,
la zone déformable est une structure avant (24), l'extrémité avant de l'habitacle tournée vers la structure avant (24) étant soulevée par rapport à la structure avant (24) grâce à une action conjointe des roues avant (41) et des plaques de déflexion (17), provoquée par un accident.

5. Véhicule automobile selon la revendication 1,
**caractérisé en ce que**,
les plaques de déflexion (17;53) sont des parties latérales d'une zone avant globalement renforcée de la paroi frontale (16) de l'habitacle.

6. Véhicule automobile selon la revendication 5,
**caractérisé en ce que**,
au moins la zone de paroi frontale (16,52) du châssis, formant les plaques de déflexion (17;53), est constituée d'un panneau de construction légère multicouche ou à parois multiples.

7. Véhicule automobile selon la revendication 6,
**caractérisé en ce que**,
la paroi frontale (14) est constituée, au niveau de sa zone inférieure (16) présentant les plaques de déflexion (17), comme une plaque globalement plate, qui s'étend au moins sur presque toute la largeur du véhicule.

8. Véhicule automobile selon la revendication 1,
**caractérisé en ce que**,
une zone du véhicule automobile pour l'espace destiné aux pieds (12) est délimitée par un caisson de soutien (22) pour la structure avant (24), se composant de panneaux de construction légère, où le caisson de soutien comprend une partie avant du plancher du véhicule (10), la paroi frontale (14), un dispositif supérieur de plaques (26,28) ainsi que des plaques latérales (30).

9. Véhicule automobile selon la revendication 8,
**caractérisé en ce que**,
l'ensemble du châssis du véhicule automobile se compose de plaques plates pour l'essentiel, qui sont à recouvrir d'éléments de revêtement extérieur (88,92).
